# FASCICULE DE BREVET EUROPEEN

(11) **EP 2 929 148 B1**
(45) Date de publication et mention de la délivrance du brevet: **08.02.2017**
(21) Numéro de dépôt: 13808153.4
(22) Date de dépôt: 03.12.2013
(51) Int. Cl.: F01D 5/02, F16B 1/00, F16F 15/34, G01M 1/32

(54) **PROCÉDÉ D'ÉQUILIBRAGE D'UN ROTOR DE TURBOMACHINE, ROTOR ET TURBOMACHINE ASSOCIÉE**
VERFAHREN ZUM AUSWUCHTEN EINES ROTORS EINER TURBOMASCHINE, ZUGEHÖRIGER ROTOR UND TURBOMASCHINE
METHOD FOR BALANCING A TURBOMACHINE ROTOR, CORRESPONDING ROTOR AND TURBOMACHINE

(30) Priorité: 10.12.2012 FR 1261830
(43) Date de publication de la demande: 14.10.2015
(73) Titulaire: SNECMA, 75015 Paris (FR)
(72) Inventeur: NICQ, Geoffroy Marie Gérard, F-77550 Moissy-Cramayel Cedex (FR)
(74) Mandataire: Boura, Olivier
(86) Numéro de dépôt international: PCT/FR2013/052926
(87) Numéro de publication internationale: WO 2014/091115

(56) Documents cités:
- EP-A1- 2 366 060
- EP-A2- 2 253 800
- US-A1- 2007 110 543

## Description

### Domaine technique

La présente invention se rapporte au domaine général de l'équilibrage d'un rotor de turbomachine, et en particulier d'une soufflante de turboréacteur d'avion.

### Arrière-plan de l'invention

De façon connue, un turboréacteur comprend une soufflante alimentant en air un canal d'écoulement primaire dans lequel sont notamment positionnés un compresseur basse-pression, un compresseur haute-pression, une chambre de combustion, une turbine haute-pression et une turbine basse-pression.

A son extrémité amont, le turboréacteur comprend une entrée d'air destinée à alimenter la soufflante. Celle-ci comporte notamment un disque sur lequel sont montées des aubes espacées circonférentiellement les unes des autres. Un cône d'entrée fixé sur le disque de la soufflante permet de dévié l'air admis dans le turboréacteur vers les aubes de la soufflante.

Pour compenser le balourd affectant la soufflante en rotation lors du fonctionnement du turboréacteur et ainsi réduire les vibrations du moteur, il est connu d'équilibrer celle-ci à l'aide de vis formant masses d'équilibrages qui sont engagées dans le disque ou le cône d'entrée. Plus précisément, ces vis présentent des longueurs qui sont différentes les unes des autres de sorte à leur conférer des masses différentes. Le nombre, la position autour de l'axe de rotation de la soufflante et la longueur de ces vis définissent une configuration d'équilibrage de la soufflante qui est installé sur celle-ci.

De même, pour compenser le balourd affectant la turbine basse-pression en rotation lors du fonctionnement du turboréacteur, des clips sont montés sur les extrémités libres des aubes du dernier étage de cette turbine. Le nombre et la position de ces clips définissent une configuration d'équilibrage de la turbine basse-pression qui est installée sur celle-ci.

Il est important que les configurations d'équilibrage de la soufflante et de la turbine basse-pression qui ont été effectivement installés soient connues lors du calcul d'une nouvelle solution d'équilibrage. A cet effet, ces configurations d'équilibrage sont stockées dans le calculateur électronique du moteur (également appelé EMU pour « Engine Monitoring Unit ») Le calcul d'une nouvelle configuration d'équilibrage implique donc que l'EMU ait en mémoire les configurations de vis installées dans la soufflante et des clips montés sur le dernier étage de la turbine basse-pression. Or, lors d'une opération de remplacement de l'EMU, ces programmes d'équilibrage sauvegardés en mémoire sont perdus et il est nécessaire de réinitialiser la mémoire du nouvel EMU avec les configurations de vis effectivement installées sur la soufflante et de clips montés sur le dernier étage de la turbine basse-pression.

Pour connaître la configuration de vis installées sur la soufflante, il est donc nécessaire de dévisser chaque vis, de noter sa longueur pour en connaître sa masse et de la revisser. De même, pour connaître la configuration des clips montés sur les aubes du dernier étage de la turbine basse-pression, il est nécessaire, soit de démonter partiellement l'arrière du moteur, soit d'utiliser un outil spécifique pour accéder à cet étage et un moyen de visualisation adéquat. Ces opérations d'inspection sont laborieuses et nécessitent une habilitation que n'a pas nécessairement le technicien chargé de réinitialiser la mémoire de l'EMU.

EP 2 366 060 A1 divulgue un procédé selon le préambule de la revendication 1, ainsi qu'un rotor de turbomachine selon le préambule de la revendication 7.

### Objet et résumé de l'invention

La présente invention a donc pour but principal de pallier de tels inconvénients en proposant un procédé d'équilibrage de la soufflante qui ne présente pas les inconvénients précités.

Ce but est atteint grâce à un procédé d'équilibrage d'un rotor de turbomachine, le procédé comprenant le montage de vis formant masses d'équilibrage sur le rotor pour former une configuration d'équilibrage, chaque vis possédant une masse prédéterminée et une tête de vis ayant une caractéristique visuelle préalablement associée à sa masse.

Chaque vis formant masse d'équilibrage présente une tête de vis ayant une caractéristique visuelle particulière associée à sa masse qui est directement détectable à l'oeil nu (les têtes de vis sont dépareillées). Ainsi, lors d'une opération de réinitialisation de la mémoire de l'EMU du moteur, l'identification des masses d'équilibrage qui sont montées sur le rotor, par exemple la soufflante de la turbomachine, est obtenue par simple visualisation des têtes de vis et comparaison des caractéristiques de celles-ci avec une table préétablie. Il n'est en particulier pas nécessaire pour le technicien en charge de cette opération d'avoir à dévisser chaque vis pour en connaître la masse. Il en résulte une opération de réinitialisation de l'EMU avec la configuration d'équilibrage du rotor qui est rapide et qui ne nécessite pas de compétences particulières.

De préférence, le procédé comprend une étape préalable consistant à établir une table dans laquelle chaque caractéristique visuelle particulière d'une tête de vis est associée à une masse prédéterminée de vis. Les caractéristiques visuelles des têtes de vis peuvent consister en des formes et/ou des couleurs particulières.

De préférence également, la configuration d'équilibrage est stockée dans une mémoire d'un calculateur électronique de la turbomachine puis transmise automatiquement à une base de données d'un centre de maintenance. Ainsi, la configuration d'équilibrage installée peut être transmise à un technicien lors d'une opération de remplacement du calculateur électronique. De même, une recommandation d'équilibrage peut être calculée par le centre de maintenance lors de la détection de vibrations en fonctionnement et transmise à un technicien, notamment pour être installée sur la soufflante.

L'invention a également pour objet un rotor de turbomachine comprenant des vis formant masses d'équilibrage qui sont montées sur le rotor, chaque vis possédant une masse prédéterminée et une tête de vis ayant une caractéristique visuelle préalablement associée à sa masse.

Des têtes de vis peuvent avoir des formes différentes. Les formes des têtes de vis peuvent être choisies parmi un carré, un rond, un hexagone, une croix, une étoile et un anneau.

Des têtes de vis peuvent avoir des couleurs différentes. Le rotor peut constituer une soufflante de turbomachine.

L'invention a encore pour objet une turbomachine équipée d'un rotor tel que défini ci-dessus ou qui est équilibré selon le procédé tel que défini précédemment.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est une vue schématique en perspective et partielle d'une soufflante de turboréacteur équilibrée selon l'invention ;
- la figure 2 montre un exemple de différentes têtes de vis utilisées comme masses d'équilibrage pour équilibrer la soufflante de la figure 1 ; et
- les figures 3A et 3B montrent des exemples d'application du procédé selon l'invention.

### Description détaillée de l'invention

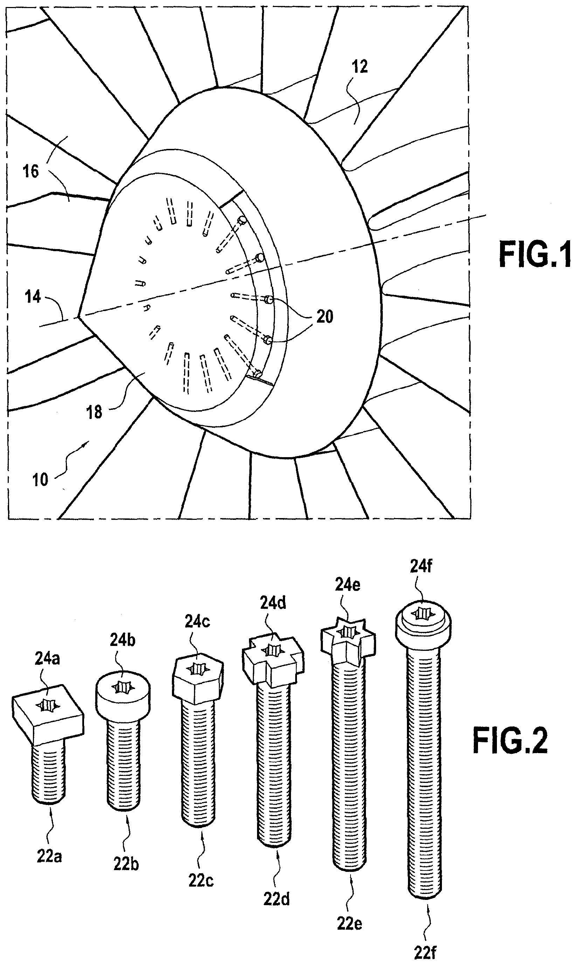

L'invention s'applique à tout rotor de turbomachine, et notamment à une soufflante de turboréacteur telle que celle qui est représentée de façon très schématique sur la figure 1.

De façon connue, la soufflante 10 d'un turboréacteur comprend notamment un disque 12 centré sur un axe de rotation 14 et sur lequel sont montées des aubes 16 espacées circonférentiellement les unes des autres. Un cône d'entrée d'air 18 est fixé sur le disque 12 en amont de celui-ci pour dévier l'air admis dans le turboréacteur vers les aubes 16 de la soufflante.

La soufflante 10 comprend également une pluralité de trous 20 (par exemple au nombre de 20) qui sont régulièrement espacés autour de son axe de rotation 14. Ces trous 20 sont par exemple formés à la périphérie extérieure du cône d'entrée d'air 18. Ils pourraient alternativement être pratiqués directement dans le disque 12 de la soufflante.

Dans l'exemple de réalisation de la figure 1, ces trous 20 s'étendent selon une direction radiale et présentent une section droite de forme circulaire et un même diamètre.

Les trous 20 sont destinés à recevoir des vis 22a à 22f (figure 2) formant masses d'équilibrage. Comme représenté sur la figure 2, ces vis 22a à 22f présentent un même diamètre mais des longueurs différentes, ce qui permet d'obtenir un lot de vis ayant des masses différentes.

Le nombre, la position angulaire autour de l'axe de rotation 14 de la soufflante et la masse des vis 22a à 22f montées sur le cône d'entrée d'air de la soufflante définissent une configuration d'équilibrage de la soufflante qui est installée sur celle-ci dans le but de réduire les vibrations du corps basse-pression du turboréacteur lors de son fonctionnement.

Une telle configuration d'équilibrage de la soufflante est propre à chaque moteur et est élaborée lors de la livraison du moteur. La façon dont cette configuration est élaborée puis traduit en termes de positionnement angulaire des masses d'équilibrage sur la soufflante est bien connue de l'homme du métier et ne sera pas détaillée ici.

Par ailleurs, à chaque vis 22a à 22f de longueur particulière (c'est-à-dire de masse particulière) est associée une tête de vis 24a à 24f ayant une caractéristique visuelle particulière.

Par caractéristique visuelle particulière, on entend ici une caractéristique de forme et/ou de couleur permettant de distinguer les vis entre elles à l'oeil nu.

La figure 2 représente ainsi 6 variantes de vis 22a à 22f. Ces vis 22a-f ont toutes des longueurs (et donc des masses) différentes entres elles. Elles présentent également des têtes de vis 24a à 24f dont des caractéristiques visuelles sont toutes différentes (les têtes de vis sont dépareillées).

Dans l'exemple de réalisation de la figure 2, ces caractéristiques visuelles consistent en des formes de têtes de vis qui se distinguent visuellement les unes des autres : la tête de vis 24a de la vis 22a présente une forme de carré, la tête de vis 24b une forme de cercle, la tête de vis 24c une forme d'hexagone, la tête de vis 24d une forme de croix, la tête de vis 24e une forme d'étoile, et la tête de vis 24f une forme d'anneau.

Dans un autre exemple de réalisation non représenté sur les figures, les caractéristiques visuelles des têtes de vis consistent en des couleurs qui se distinguent visuellement les unes des autres : une tête de vis peut être de couleur rouge, une autre de couleur verte, une autre de couleur jaune, une autre de couleur bleue, une autre de couleur noire, une autre de couleur blanche, etc.

Le recours à un code couleurs pour différencier les vis les unes des autres nécessite d'utiliser une peinture capable de résister aux conditions difficiles rencontrées en fonctionnement du moteur, à savoir résister aux chocs thermiques, à l'impact de sable, etc.

De plus, une table de correspondance est préalablement établie pour être consultée par un technicien n'ayant pas nécessairement une qualification pour réaliser l'équilibrage d'une soufflante. Cette table recense chaque vis pouvant être utilisée comme masse d'équilibrage dans la soufflante en y listant chaque forme de tête de vis associée à la masse de la vis correspondante.

De la sorte, à l'aide de cette table, un technicien cherchant à identifier la configuration d'équilibrage de la soufflante qui a été préalablement installée sur celle-ci peut, par simple inspection visuelle des têtes de vis et sans nécessiter d'avoir à retirer ces vis, reconnaitre de façon rapide, simple et fiable la configuration des masses d'équilibrage. A cet effet, le technicien inspecte visuellement les têtes de vis montées sur la soufflante et en identifie la masse en se reportant à sa table de correspondance. Il en résulte un gain de temps considérable et la possibilité pour le technicien de pouvoir réaliser cette opération sans avoir de compétences particulières.

Le procédé d'équilibrage selon l'invention peut avantageusement être mise en oeuvre dans différentes situations.

Dans une étape initiale, le moteur est équilibré lors de sa livraison. Plus précisément, l'équilibrage est réalisé dans deux plans, à savoir dans le plan de la soufflante conformément au procédé de l'invention, et dans le plan de la turbine basse-pression en ajoutant des clips sur le sommet des aubes du dernier étage de la turbine basse-pression.

Une fois le moteur équilibré, les configurations d'équilibrage de la soufflante et de la turbine basse-pression sont stockées dans une mémoire interne du calculateur électronique du moteur (ou EMU pour « Engine Monitoring Unit »), puis avantageusement transmises de façon automatique vers une base de données d'un centre chargé de la maintenance de l'ensemble des moteurs de l'exploitant.

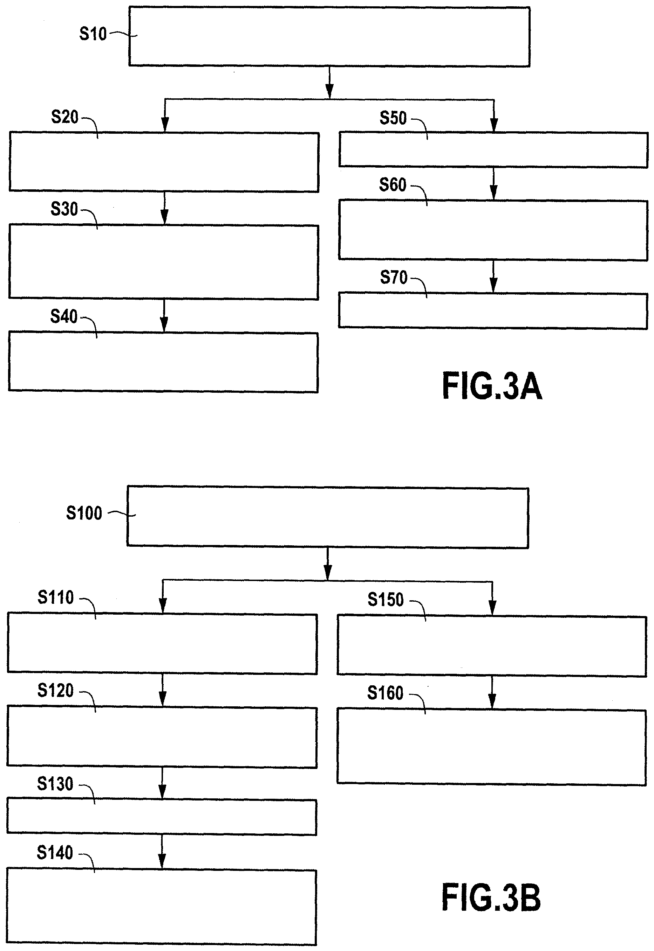

Une première situation dans laquelle le procédé selon l'invention peut être mise en oeuvre est celle du remplacement de l'EMU (figure 3A). Au cours de cette opération de maintenance réalisée par un technicien, la mémoire interne de l'EMU est réinitialisée (étape S10).

Le technicien en charge du remplacement de l'EMU interroge alors à distance le centre de maintenance (étape S20) qui lui transmet les configurations d'équilibrage dernièrement installées sur la soufflante et la turbine basse-pression (S30). La configuration d'équilibrage de la soufflante peut également être identifiée visuellement par inspection des têtes de vis comme décrit précédemment.

Ainsi, le technicien peut réinitialiser la mémoire du nouvel EMU avec les configurations d'équilibrage effectivement installées à la fois sur la soufflante et la turbine basse-pression. En particulier, le technicien n'a pas à démonter les vis d'équilibrage de la soufflante ni à accéder au dernier étage de la turbine basse-pression pour connaître ces configurations d'équilibrage.

L'équilibrage du moteur qui est ainsi initialisé dans la mémoire interne du nouvel EMU est renseigné selon les deux plans, à savoir celui de soufflante et celui de la turbine basse-pression (étape S40).

En revanche, dans le cas où le technicien n'a pas la possibilité d'interroger à distance le centre de maintenance ou n'a pas les outils adéquats ou les qualifications requises pour accéder au dernier étage de la turbine basse-pression, il pourra se contenter d'identifier visuellement la configuration d'équilibrage de la soufflante (étape S50) par simple inspection visuelle des têtes de vis comme décrit précédemment.

La configuration d'équilibrage de la soufflante ainsi identifiée peut alors être initialisée dans la mémoire interne du nouvel EMU (étape S60). On notera que l'équilibrage du moteur qui est ainsi initialisé dans la mémoire interne du nouvel EMU est renseigné dans un seul plan, à savoir celui de soufflante (étape S70), qui couvre la grande majorité des besoins et des opérations d'équilibrage.

Une seconde situation dans laquelle le procédé selon l'invention peut être mise en oeuvre est celle d'une détection de vibrations anormales sur l'avion nécessitant de changer l'équilibrage du moteur (figure 3B).

Ces vibrations anormales peuvent être détectées par l'utilisateur de l'avion ou directement par le centre de maintenance (étape S100) qui reçoit à cet effet des données vibratoires de l'avion en vol.

Lorsque le centre de maintenance détecte de telles vibrations anormales, il peut calculer par lui-même de nouvelles configurations d'équilibrage pour la soufflante et la turbine (étape S110).

Ces recommandations d'équilibrage sont alors transmises directement au pilote de l'avion ou au technicien (étape S120), à charge pour eux de les installer sur le moteur. A cet effet, l'avion embarque une mallette de maintenance contenant des vis d'équilibrage pour la soufflante et des clips pour l'équilibrage de la turbine basse-pression. Ainsi, l'opération de maintenance de l'équilibrage (étape S130) peut être réalisée par un technicien sans avoir besoin que celui-ci possède des compétences particulières dans ce domaine.

Les configurations d'équilibrage effectivement installées sur le moteur suite à cette opération de maintenance de l'équilibrage sont alors stockées dans la mémoire interne de l'EMU et transmises de façon automatique vers le centre de maintenance (étape S140).

Alternativement, le calcul de nouvelles configurations d'équilibrage pour la soufflante et la turbine suite à la détection de vibrations anormales peut être réalisé par un personnel qualifié directement sous aile au moyen de l'EMU (étape S150).

Ces nouvelles configurations d'équilibrage effectivement installées sur le moteur sont alors stockées dans la mémoire interne de l'EMU et transmises de façon automatique vers le centre de maintenance (étape S160).

## Revendications

1. Procédé d'équilibrage d'un rotor (10) de turbomachine, le procédé comprenant le montage de vis (22a à 22f) formant masses d'équilibrage sur le rotor pour former une configuration d'équilibrage, **caractérisé en ce que** chaque vis possède une masse prédéterminée et une tête de vis (24a à 24f) ayant une caractéristique visuelle préalablement associée à sa masse.

2. Procédé selon la revendication 1, comprenant une étape préalable consistant à établir une table dans laquelle chaque caractéristique visuelle particulière d'une tête de vis est associée à une masse prédéterminée de vis.

3. Procédé selon l'une des revendications 1 et 2, dans lequel les caractéristiques visuelles des têtes de vis consistent en des formes et/ou des couleurs particulières.

4. Procédé selon l'une quelconque des revendications 1 à 3, dans lequel la configuration d'équilibrage est stockée dans une mémoire d'un calculateur électronique de la turbomachine puis transmise automatiquement à une base de données d'un centre de maintenance.

5. Procédé selon la revendication 4, dans lequel la configuration d'équilibrage installée est transmise à un technicien lors d'une opération de remplacement du calculateur électronique.

6. Procédé selon l'une des revendications 4 et 5, dans lequel une recommandation d'équilibrage est calculée par le centre de maintenance lors de la détection de vibrations en fonctionnement et transmise à un technicien.

7. Rotor (10) de turbomachine comprenant des vis (22a à 22f) formant masses d'équilibrage qui sont montées sur le rotor, **caractérisé en ce que** chaque vis possède une masse prédéterminée et une tête de vis (24a à 24f) ayant une caractéristique visuelle préalablement associée à sa masse.

8. Rotor selon la revendication 7, dans lequel des têtes de vis ont des formes différentes.

9. Rotor selon la revendication 8, dans lequel les formes des têtes de vis sont choisies parmi un carré, un rond, un hexagone, une croix, une étoile et un anneau.

10. Rotor selon la revendication 7, dans lequel des têtes de vis ont des couleurs différentes.

11. Rotor selon l'une quelconque des revendications 7 à 10 constituant une soufflante.

12. Turbomachine équipée d'un rotor selon l'une quelconque des revendications 7 à 10 ou qui est équilibré selon le procédé de l'une quelconque des revendications 1 à 6.

## Patentansprüche

1. Verfahren zum Auswuchten eines Rotors (10) einer Turbomaschine, wobei das Verfahren das Anbringen von Ausgleichsmassen bildenden Schrauben (22a bis 22f) an dem Rotor umfasst, um eine Ausgleichskonfiguration zu bilden,
**dadurch gekennzeichnet**, das eine jede Schraube eine vorbestimmte Masse und einen Schraubenkopf (24a bis 24f) mit einem zuvor ihrer Masse zugeordneten visuellen Merkmal besitzt.

2. Verfahren nach Anspruch 1, umfassend einen vorherigen Schritt, der darin besteht, eine Tabelle zu erstellen, in der jedes besondere visuelle Merkmal eines Schraubenkopfes einer vorbestimmten Schraubenmasse zugeordnet ist.

3. Verfahren nach einem der Ansprüche 1 und 2, bei dem die visuellen Merkmale der Schraubenköpfe in besonderen Formen und/oder Farben bestehen.

4. Verfahren nach einem der Ansprüche 1 bis 3, bei dem die Ausgleichskonfiguration in einem Speicher eines elektronischen Rechners der Turbomaschine gespeichert wird, anschließend automatisch an eine Datenbank eines Wartungszentrums übertragen wird.

5. Verfahren nach Anspruch 4, bei dem die eingerichtete Ausgleichskonfiguration bei einem Vorgang zum Auswechseln des elektronischen Rechners an einen Techniker übermittelt wird.

6. Verfahren nach einem der Ansprüche 4 und 5, bei dem bei der Erfassung von Betriebserschütterungen eine Auswuchtempfehlung durch das Wartungszentrum berechnet und an einen Techniker übermittelt wird.

7. Rotor (10) einer Turbomaschine mit Ausgleichsmassen bildenden Schrauben (22a bis 22f), die an dem Rotor angebracht sind, **dadurch gekennzeichnet, dass** eine jede Schraube eine vorbestimmte Masse und einen Schraubenkopf (24a bis 24f) mit einem zuvor ihrer Masse zugeordneten visuellen Merkmal besitzt.

8. Rotor nach Anspruch 7, bei dem Schraubenköpfe unterschiedliche Formen aufweisen.

9. Rotor nach Anspruch 8, bei dem die Formen der Schraubenköpfe aus einem Quadrat, einem Kreis, einem Sechseck, einem Kreuz, einem Stern und einem Ring ausgewählt sind.

10. Rotor nach Anspruch 7, bei dem Schraubenköpfe unterschiedliche Farben aufweisen.

11. Rotor nach einem der Ansprüche 7 bis 10, der ein Gebläse bildet.

12. Turbomaschine, ausgestattet mit einem Rotor nach einem der Ansprüche 7 bis 10 oder der nach dem Verfahren von einem der Ansprüche 1 bis 6 ausgewuchtet ist.

## Claims

1. A method of balancing a turbine engine rotor (10), the method comprising mounting screws (22a to 22f) forming balance weights on the rotor in order to form a balance configuration, **characterized in that** each screw possesses a predetermined weight and a screw head (24a to 24f) having a visual characteristic previously associated with its weight.

2. A method according to claim 1, including a prior step consisting in establishing a table in which each particular visual characteristic of a screw head is associated with a predetermined screw weight.

3. A method according to claim 1 or claim 2, wherein the visual characteristics of the screw heads consists in particular shapes and/or colors.

4. A method according to any one of claims 1 to 3, wherein the balance configuration is stored in a memory of an electronic computer of the turbine engine and is then transmitted automatically to a database of a maintenance center.

5. A method according to claim 4, wherein the installed balance configuration is transmitted to a technician during an operation of replacing the electronic computer.

6. A method according to claim 4 or claim 5, wherein a balance recommendation is calculated by the maintenance center in the event of vibration being detected in operation, and the recommendation is transmitted to a technician.

7. A turbine engine rotor (10) including screws (22a to 22f) forming balance weights that are mounted on the rotor, **characterized in that** each screw possesses a predetermined weight and a screw head (24a to 24f) having a visual characteristic previously associated with its weight.

8. A rotor according to claim 7, wherein the screw heads are of different shapes.

9. A rotor according to claim 8, wherein the screw head shapes are selected from square, round, hexagonal, cross-shaped, star-shaped, and ring-shaped.

10. A rotor according to claim 7, wherein the screw heads are of different colors.

11. A rotor according to any one of claims 7 to 10, constituting a fan.

12. A turbine engine having a rotor according to any one of claims 7 to 10 or that is balanced using the method according to any one of claims 1 to 6.
